# EUROPÄISCHE PATENTSCHRIFT

(11) **EP 1 509 345 B1**
(45) Veröffentlichungstag und Bekanntmachung des Hinweises auf die Patenterteilung: **12.10.2005**
(21) Anmeldenummer: 03720359.3
(22) Anmeldetag: 25.03.2003
(51) Int. Cl.: B21C 47/02, B21C 47/16

(54) **COILBOX, DIE ZWISCHEN VOR- UND FERTIGWALZSTRASSEN ANGEORDNET IST**
COIL BOX, MOUNTED BETWEEN A ROUGHING ROLLING TRAIN AND A FINISHING ROLLING TRAIN
CAGE A CYLINDRES MONTEE ENTRE DES TRAINS DE LAMINOIR DEGROSSISSEUR ET DES TRAINS DE LAMINOIR FINISSEUR

(30) Priorität: 29.05.2002 DE 10223905
(43) Veröffentlichungstag der Anmeldung: 02.03.2005
(73) Patentinhaber: SMS Demag Aktiengesellschaft, 40237 Düsseldorf (DE)
(72) Erfinder: LADDA-ZUNK, Barbara, 57271 Hilchenbach (DE); MICHEL, Waldemar, 57482 Wenden (DE); EHLS, Bernhard, 57271 Hilchenbach (DE); BEUTER, Matthias, 57319 Bad Berleburg (DE)
(74) Vertreter: Valentin, Ekkehard
(86) Internationale Anmeldenummer: PCT/EP2003/003080
(87) Internationale Veröffentlichungsnummer: WO 2003/101639

(56) Entgegenhaltungen:
- EP-A- 0 904 861
- WO-A-91/09694
- US-A- 4 465 912

## Beschreibung

Die Erfindung betrifft eine Coilbox, die zwischen Vor- und Fertigwalzstraßen angeordnet ist, für Vorband-Metall-, insbesondere für -Stahlbänder, die zu Bunden warm gewickelt und mittels Hitzeschild-Einrichtungen an den Coil-Stirnflächen im Bereich einer Auf- und / oder einer Abwickelstation vor weiterer Abkühlung geschützt sind.

Eine derartige Coilbox ist aus der WO-A 9 109 694 bekannt. Dort sind Seitenwände für einen dornlosen Wickelprozess vorgesehen, um das heiße metallische Material in einer ersten Wickellage aufzuwickeln. Daran schließt sich eine Abwickelstation an, von der das Stahlband in die Fertigwalzstraße geführt wird. Die Hitzeschild-Seiten-wände sind funktionell mit der dornlosen Auf- oder Abwickelvorrichtung verknüpft, die denselben Abstand benötigt. Die Hitzeschild-Einrichtungen sind mit einer zurückstrahlenden inneren Oberfläche versehen. Solche Hitzeschild-Einrichtungen werden sowohl in der Aufwickelstation als auch in der Abwickelstation eingesetzt. Dabei kann nicht immer eine ausreichende Abdeckung der Stirnflächen des Coils erreicht werden.

Der Erfindung liegt die Aufgabe zugrunde, eine solche Hitzeschild-Einrichtung auch für wechselnde Coil-Abmessungen, die in der betreffenden Walzstraße verarbeitet werden, zu schaffen.

Die gestellte Aufgabe wird erfindungsgemäß dadurch gelöst, dass die Hitzeschild-Einrichtungen aus schwenkbar an die Coil-Stirnflächen anstellbaren Seitenwänden gebildet und in einem gebildeten Paar sich gegenüberliegende Hitzeschild-Einrich-tungen auf unterschiedliche Coil-Breiten parallel einstellbar sind. Die Hitzeschild-Einrichtungen im Bereich der Abwickelstation einer Coilbox reduzieren den Temperaturunterschied zwischen der Bandkante und der Bandmitte und trägt zusätzlich dazu bei, die Wärmeverteilung in der Bandmitte über die Bandlänge konstanter zu halten. Dadurch wird eine bessere Temperaturverteilung im Vorband erzielt, bevor dieses in die Fertigwalzstraße einläuft und damit eine bessere Qualität des Endproduktes. Gleichzeitig können völlig unterschiedlich breite Metallbänder geschützt werden.

In Ausgestaltung ist vorgesehen, dass die Hitzeschild-Einrichtungen mittels jeweils einer gegenläufig betreibbaren Kolben-Zylinder-Einheit an die Coil-Stirnfläche anstellbar sind. Dadurch kann der Raum zwischen den Bandkanten und der Seitenwand so gering wie möglich gehalten werden.

Die aufwändigeren Mittel brauchen den Zugang zu der Abwickelstation keineswegs zu beeinträchtigen. Das Prinzip der Schwenkbarkeit der Hitzeschild-Einrichtungen kann dazu genutzt werden, dass die Hitzeschild-Einrichtungen jeweils pro Coil-Seite als Einheit mittels eines Schwenkantriebs aus dem Bereich der Abwickelstation herausschwenkbar sind.

Zur Berücksichtigung der Gegebenheiten in der Walzstraße ist ferner vorteilhaft, dass auf einer hinteren Coil-Seite die Hitzeschild-Einrichtung mittels des Schwenkantriebs um eine horizontale Schwenk-Achse in einer senkrechten Ebene auf einer Kreisbahn und auf einer vorderen Coil-Seite die Hitzeschild-Einrichtung mittels des Schwenkantriebs um eine senkrechte Schwenk-Achse auf einer horizontalen Kreisbahn heraus oder zurückschwenkbar ist.

Eine andere Ausgestaltung sieht vor, dass die Seitenwände türartig ausgebildet und jeweils mittels des Schwenkantriebs wegschwenkbar oder schließbar sind. Damit ist der Vorteil verbunden, um bei einem Störfall ein gewickeltes Coil mittels eines C-Hakens aus der Coilbox zu entfernen. Außerdem können durch die türähnliche Ausbildung Wartungsarbeiten begünstigt werden.

Eine Weiterbildung ist ferner dadurch gegeben, dass die pro Seite ausschwenkbare Hitzeschild-Einrichtung jeweils aus einem hydraulischen Schwenkantrieb, aus Auslegerarmen, der Kolben-Zylinder-Einheit, einem Schwenkhebel, einem Brückenrahmen und der jeweiligen Seitenwand besteht, wobei die Einheit an einem quer verlaufenden Rahmen gelagert ist. Die Einheit kann daher auch noch später an einer Abwickelstation angebracht werden.

Die Parallelverstellung der Seitenwände wird nach anderen Merkmalen derart gestaltet, dass an dem in der Abwickelstation quer zur Mitte der Walzstraße verlaufenden Querrahmen jeweils nach außen ragende Auslegerarme befestigt sind, an denen jeweils der Zylinder der Kolben-Zylinder-Einheit angelenkt ist, dass die zugehörige Kolbenstange an einem an dem Rahmen gelenkig gelagerten Schwenkhebel etwa mittig angreift und dass am Ende des Schwenkhebels der sich etwa über die Länge der Seitenwand erstreckende Brückenrahmen gelenkig befestigt ist, an dem die jeweilige Seitenwand an mehreren Stützstellen befestigt ist.

Aufgrund vorgenommener Messungen ist es weiter vorteilhaft, dass die Seitenwand auf der Heißseite außer mit Isolierstoff mit einer folienartigen Stahlschicht belegt ist. Die Stahlfolie wird deutlich schneller warm. Aufgrund des unmittelbaren Kontaktes der Stahlfolie mit dem Isoliermaterial erwärmt sich auch das Isoliermaterial schneller. Da die Isolierwirkung umso größer ist, je heißer die innere Oberflächentemperatur des Hitzeschildes ist, erreicht der Hitzeschild mit der Folie die volle Isolation schneller als ein Hitzeschild ohne diese Folie.

Die positive Wirkung geht aber verloren, wenn die Folie zu dick gewählt wird. Ein nur 0,5 mm dickes Stahlblech hat keine erkennbare Wirkung mehr. Aufgrund dieser Erkenntnisse ist es vorteilhaft, dass die folienartige Stahlschicht eine Dicke von etwa 0,05 - 0,3 mm , vorzugsweise von 0, 1 mm aufweist.

Eine Verbesserung der Erfindung stellt noch dar, dass zusätzlich zu den Seitenwänden und an diese anschließend auf der Abwickelstation paarweise Stabilisatoren mit dem Isoliermaterial und auf der Aufwickelstation ebenfalls paarweise Stabilisatoren mit dem Isoliermaterial vorgesehen sind. Gleichzeitig kann, falls dadurch die Isolierung noch wirkungsvoller wird, auf dem Isoliermaterial die folienartige Stahlschicht eingesetzt werden. Dadurch können die Stirnseiten des Coils noch besser isoliert werden.

In der Zeichnung sind Ausführungsbeispiele der Erfindung dargestellt, die nachstehend näher erläutert werden.

Es zeigen:
- Fig. 1: eine Seitenansicht des die Coilbox aufnehmenden Abschnitts der Walzstraße,
- Fig. 2: eine Draufsicht auf die Anlage in Richtung "X" gemäß Fig. 1 und
- Fig. 3: einen senkrechten Schnitt A-A gemäß Fig. 1.

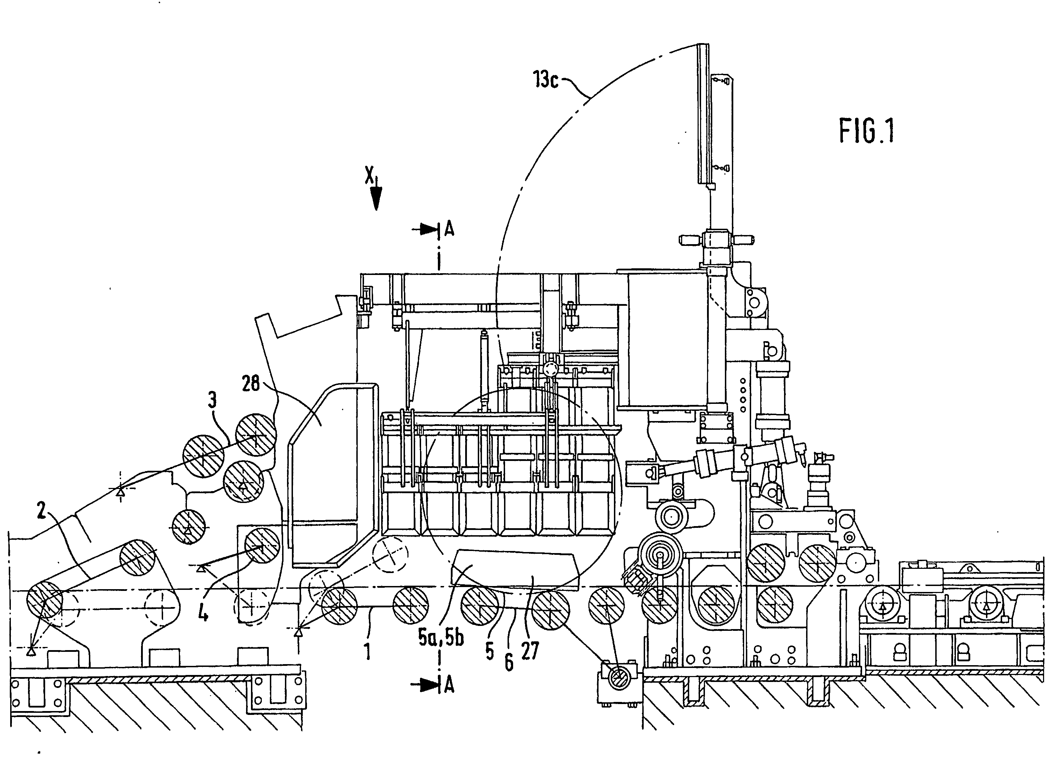

In Fig. 1 ist zwischen einer Vor- und einer Fertigwalzstraße eine Coilbox angeordnet, mit einer Aufwickelstation 1, in der über Einlaufrollen 2, Biegerollen 3 und eine Formrolle 4 das Coil 5 gewickelt wird. Das Coil 5 befindet sich in der Abwickelstation 6. In der Abwickelstation 6 wird das Coil 5 an seinen beiden, in der Zeichenebene liegende Coil-Stirnflächen 5a, 5b und mittels Hitzeschild-Einrichtungen 7 im Bereich der Abwickelstation 6 vor weiterer Abkühlung geschützt.

Darüber hinaus sind die Hitzeschild-Einrichtungen 7 aus schwenkbar an die Coil-Stirnflächen 5a, 5b anstellbaren Seitenwänden 8a, 8b gebildet und die in einem gebildeten Paar sich gegenüberliegenden Hitzeschild-Einrichtungen 7 sind auf unterschiedliche Coilbreiten 5c (einer maximalen und einer minimalen Coilbreite) parallel einstellbar. Die Seitenwände 8a, 8b sind jeweils symmetrisch zur Mitte 9 der Walzstraße geführt.

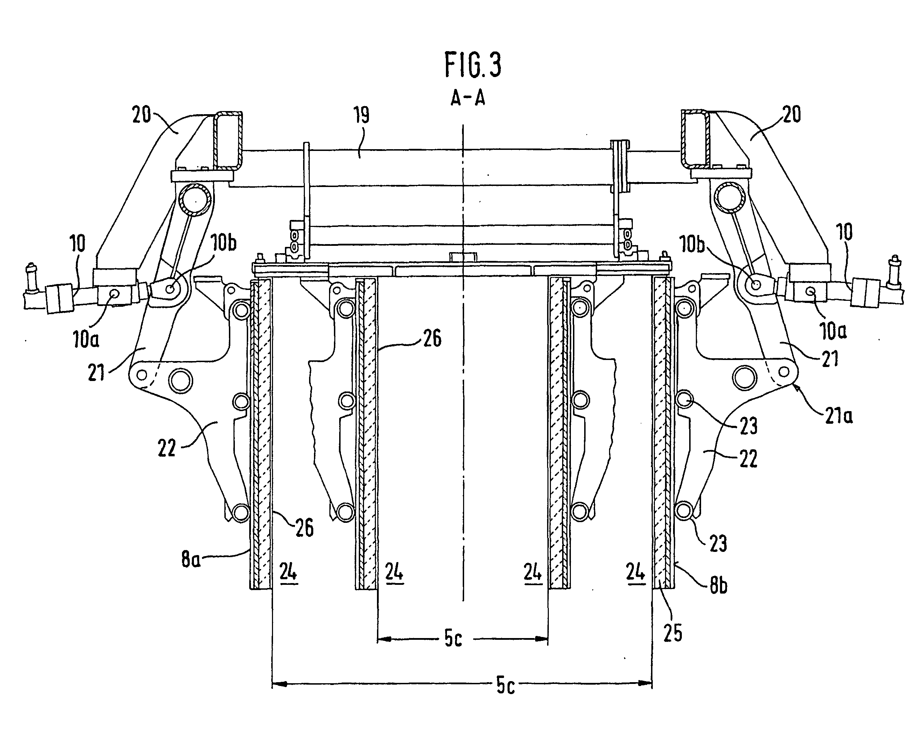

Gemäß Fig. 3 können die Hitzeschild-Einrichtungen 7 mittels jeweils einer gegenläufig betreibbaren Kolben-Zylinder-Einheit 10 an die Coil-Stirnflächen 5a, 5b angestellt werden.

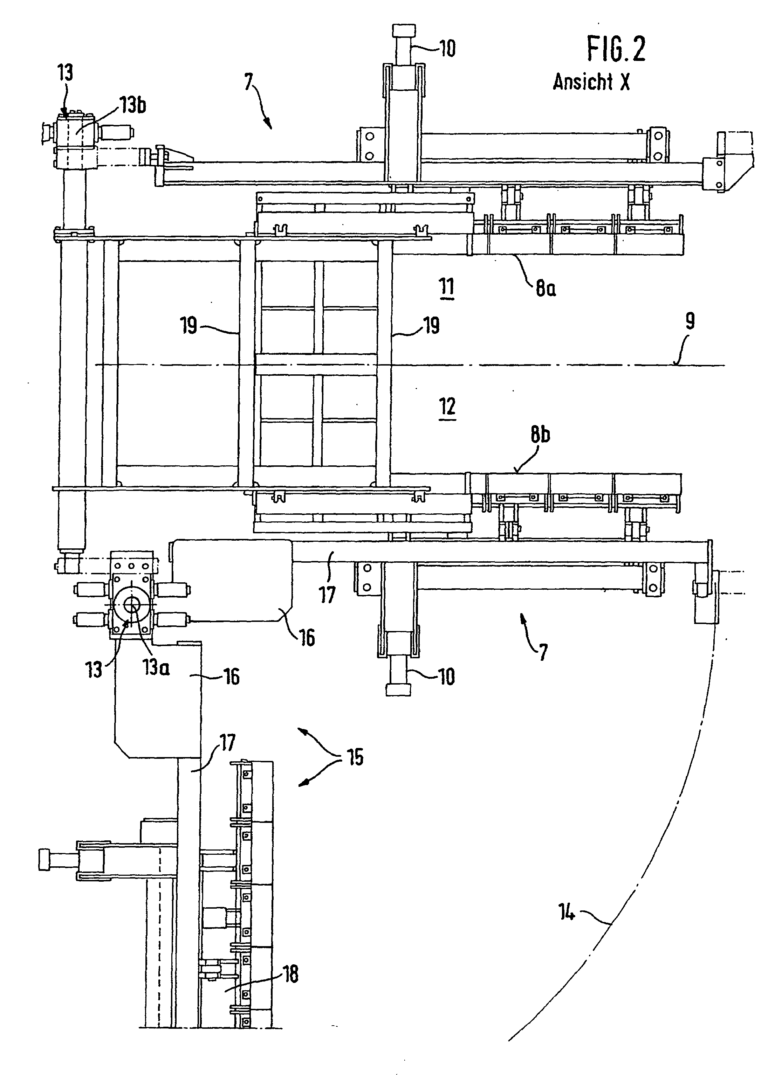

In Fig. 2 ist auf einer vorderen Coil-Seite 11 die gesamte Einheit 15 mittels eines (hydraulischen) Schwenkantriebs 13 um eine senkrechte Schwenk-Achse 13a auf einer horizontalen Kreisbahn 14 horizontal herausschwenkbar oder zurückschwenkbar, wie im unteren Teil der Fig. 2 gezeigt ist. Die Schwenkachse des Schwenkantriebs 13 verläuft senkrecht zur Zeichenebene.

Ebenso ist auf einer hinteren Coil-Seite 11 die Hitzeschild-Einrichtung 7 mittels des Schwenkantriebs 13 um eine horizontale Schwenk-Achse 13b in einer senkrechten Ebene auf einer Kreisbahn 13c herausschwenkbar oder wieder zurückschwenkbar.

Die Seitenwände 8a, 8b können etwa wie gezeichnet türartig ausgebildet sein und sind mittels des Schwenkantriebs 13 auf der senkrechten Schwenkachse 13a auf der Kreisbahn 14 zum Öffnen oder Schließen zu schwenken.

Dabei besteht die gesamte Einheit 15 der ausschwenkbaren Hitzeschild-Einrichtung 7 jeweils aus einem Schwenkantrieb 13, aus einem Auslegerarm 16, der Kolben-Zylinder-Einheit 10, aus einem Schwenkhebel 17, einem Brükkenrahmen 18 und aus der jeweiligen Seitenwand 8a, 8b, wobei die Einheit 15 an einem quer verlaufenden Rahmen 19 gelagert ist (vgl. Fig. 1).

Gemäß Fig. 3 sind an dem in der Abwickelstation 6 quer zur Mitte 9 der Walzstraße verlaufenden Querrahmen 19 jeweils nach außen ragende Träger 20 befestigt. Der Zylinder 10a der Kolben-Zylinder-Einheit 10 ist gelenkig mit dem Träger 20 verbunden. Die zugehörige Kolbenstange 10b ist an einem mit dem Querrahmen 19 verbundenen Schwenkhebel 21 ebenfalls gelenkig angeschlossen, wobei der Angriffspunkt mittig liegen kann. Am Ende 21 a des Schwenkhebels 19 ist ein sich etwa über die Länge der Seitenwand 8a, 8b erstreckender Brückenrahmen 22 gelenkig befestigt und an dem Brückenrahmen 22 sind Stützstellen 23 als Verbindung zu den Seitenwänden 8a, 8b gebildet.

Die Seitenwände 8a, 8b sind auf der Heißseite 24 mit Isoliermaterial 25 und das Isoliermaterial 25 ist mit einer folienartigen Stahlschicht 26 beschichtet. Die Stahlschicht 26 weist eine Dicke von etwa 0,1 mm auf und darf nur wenig dicker oder dünner sein.

Gleichzeitig ist noch die Ergänzung vorgesehen (Fig. 1), dass zusätzlich zu den Seitenwänden 8a; 8b und an diese anschließend auf der Abwickelstation 6 paarweise Stabilisatoren 27 mit dem Isoliermaterial 25 und auf der Aufwickelstation 1 ebenfalls paarweise Stabilisatoren 28 mit dem Isoliermaterial 25 vorgesehen sind. Es ist auch zweckmäßig, dass das Isoliermaterial 25 mit der folienartigen Stahlschicht 26 belegt ist.

### Bezugszeichenliste

- 1.: Aufwickelstation
- 2.: Einlaufrolle
- 3.: Biegerolle
- 4.: Formrolle
- 5.: Coil
- 5a: Coil-Stirnfläche
- 5b: Coil-Stirnfläche
- 5c: Coil-Breite
- 6.: Abwickelstation
- 7.: Hitzeschild-Einrichtung
- 8a: Seitenwand
- 8b: Seitenwand
- 9: Mitte der Walzstraße
- 10.: Kolben-Zylinder-Einheit
- 10a: Zylinder
- 10b: Kolbenstange
- 11.: Coil-Seite
- 12.: Coil-Seite
- 13.: Schwenkantrieb
- 13a: senkrechte Schwenk-Achse
- 13b: horizontale Schwenk-Achse
- 13c: Kreisbahn des Öffnungswinkels
- 14.: Kreisbahn
- 15.: Einheit
- 16.: Auslegerarm
- 17.: Schwenkhebel
- 18.: Brücken rahmen
- 19.: Querrahmen
- 20.: Träger
- 21.: Schwenkhebel
- 21 a: Ende des Schwenkhebels
- 22.: Brückenrahmen
- 23.: Stützstelle
- 24.: Heißseite
- 25.: Isoliermaterial
- 26.: Stahlschicht
- 27.: Stabilisator der Abwickelstation
- 28.: Stabilisator der Aufwickelstation

## Patentansprüche

1. Coilbox, die zwischen Vor- und Fertigwalzstraßen angeordnet ist, für Vorband-Metall-, insbesondere - Stahlbänder, die zu Bunden warm gewickelt und mittels Hitzeschild-Einrichtungen an den Coil-Stirnflächen im Bereich einer Auf- und / oder einer Abwickelstation vor weiterer Abkühlung geschützt sind,
**dadurch gekennzeichnet,**
**dass** die Hitzeschild-Einrichtungen (7) aus schwenkbar an die Coil-Stirnflächen (5a; 5b) anstellbaren Seitenwänden (8a; 8b) gebildet und in einem gebildeten Paar sich gegenüberliegende Hitzeschild-Einrichtungen (7) auf unterschiedliche Coil-Breiten (5c) parallel einstellbar sind.

2. Coilbox nach Anspruch 1,
**dadurch gekennzeichnet,**
**dass** die Hitzeschild-Einrichtungen (7) mittels jeweils einer gegenläufig betreibbaren Kolben-Zylinder-Einheit (10) an die Coil-Stirnfläche (5a; 5b) anstellbar sind.

3. Coilbox nach einem der Ansprüche 1 oder 2,
**dadurch gekennzeichnet,**
**dass** die Hitzeschild-Einrichtungen (7) jeweils pro Coil-Seite (11; 12) als Einheit (15) mittels eines Schwenkantriebs (13) aus dem Bereich der Abwickelstation (6) herausschwenkbar sind.

4. Coilbox nach einem der Ansprüche 1 bis 3,
**dadurch gekennzeichnet,**
**dass** auf einer hinteren Coil-Seite (11) die Hitzeschild-Einrichtung (7) mittels des Schwenkantriebs (13) um eine horizontale Schwenk-Achse (13b) in einer senkrechten Ebene auf einer Kreisbahn (13c) und auf einer vorderen Coil-Seite (12) die Hitzeschild-Einrichtung (7) mittels des Schwenkantriebs (13) um eine senkrechte Schwenk-Achse (13a) auf einer horizontalen Kreisbahn (14) heraus oder zurückschwenkbar ist.

5. Coilbox nach einem der Ansprüche 1 bis 4,
**dadurch gekennzeichnet,**
**dass** die Seitenwände (8a; 8b) türartig ausgebildet und jeweils mittels des Schwenkantriebs (13) wegschwenkbar oder schließbar sind.

6. Coilbox nach einem der Ansprüche 1 bis 5,
**dadurch gekennzeichnet,**
**dass** die pro Seite (11; 12) ausschwenkbare Hitzeschild-Einrichtung (7) jeweils aus dem hydraulischen Schwenkantrieb (13), aus Auslegerarmen (16), der Kolben-Zylinder-Einheit (10), einem Schwenkhebel (17), einem Brückenrahmen (18) und der jeweiligen Seitenwand (8a; 8b) besteht, wobei die Einheit (15) an dem querverlaufenden Rahmen (19) gelagert ist.

7. Coilbox nach einem der Ansprüche 1 bis 6 ,
**dadurch gekennzeichnet,**
**dass** an dem in der Abwickelstation (6) quer zur Mitte (9) der Walzstraße verlaufenden Querrahmen (19) jeweils nach außen ragende Träger (20) befestigt sind, an denen jeweils der Zylinder (10a) der Kolben-Zylinder-Einheit (10) angelenkt ist, dass die zugehörige Kolbenstange (10b) an einem an dem Querrahmen (19) gelenkig gelagerten Schwenkhebel (21) etwa mittig angreift und dass am Ende (21a) des Schwenkhebels (21) der sich etwa über die Länge der Seitenwand (8a; 8b) erstreckende Brückenrahmen (22) gelenkig befestigt ist, an dem die jeweilige Seitenwand (8a;8b) an mehreren Stützstellen (23) befestigt ist.

8. Coilbox nach einem der Ansprüche 1 bis 7,
**dadurch gekennzeichnet,**
**dass** die Seitenwand (8a; 8b) auf der Heißseite (24) außer mit Isoliermaterial (25) mit einer folienartigen Stahlschicht (26) belegt ist.

9. Coilbox nach Anspruch 8,
**dadurch gekennzeichnet**,
die folienartige Stahlschicht (26) eine Dicke von etwa 0,05 - 0,3 mm aufweist.

10. Coilbox nach einem der Ansprüche 1 bis 8,
**dadurch gekennzeichnet,**
**dass** zusätzlich zu den Seitenwänden (8a, 8b) und an diese anschließend auf der Abwickelstation (6) paarweise Stabilisatoren (27) mit dem Isoliermaterial (25) und auf der Abwickelstation (1) ebenfalls paarweise Stabilisatoren (28) mit dem Isoliermaterial (25) vorgesehen sind.

## Claims

1. Coil box, which is arranged between blooming and finishing trains, for pre-strip metal strips, particularly pre-strip steel strips, which are wound in warm state to form coils and which are protected against further cooling down by means of heat shield devices at the coil end surfaces in the region of a winding-up station and/or an unwinding station, **characterised in that** the heat shield devices (7) are formed from side walls (8a; 8b) pivotably placeable against the coil end surfaces (5a; 5b), and heat shield devices (7) which are mutually opposite in a formed pair are settable in parallel to different coil widths (5c).

2. Coil box according to claim 1, **characterised in that** the heat shield devices (7) are adjustable to the coil end surface (5a; 5b) by means of a respective reciprocatingly operable piston-cylinder unit (10).

3. Coil box according to one of claims 1 and 2, **characterised in that** the heat shield devices (7) are pivotable out of the region of the unwinding station (6) as a unit per coil side (11; 12) by means of a pivot drive (13).

4. Coil box according to one of claims 1 to 3, **characterised in that** on a rear coil side (11) the heat shield device (7) is pivotable by means of the pivot drive (13) out or back in a vertical plane on a circular path (13c) about a horizontal pivot axis (13b) and on a front coil side (12) the heat shield device (7) is pivotable out or back on a horizontal circular path (14) by means of the pivot drive (13) about a vertical pivot axis (13a).

5. Coil box according to one of claims 1 to 4, **characterised in that** the side walls (8a; 8b) are of door-like construction and are respectively pivotable away or closable by means of the pivot drive (13).

6. Coil box according to one of claims 1 to 5, **characterised in that** the heat shield device (7) pivotable out per side (11; 12) respectively consists of the hydraulic pivot drive (13), cantilever arms (16), the piston-cylinder unit (10), a pivot lever (17), a bridge frame (18) and the respective side wall (8a; 8b), wherein the unit (15) is mounted at the transversely extending frame (19).

7. Coil box according to one of claims 1 to 6, **characterised in that** fastened to the transverse frame (19) extending in the unwinding station (6) transversely to the centre (9) of the rolling train is a respective outwardly projecting beam (20) with which in each instance the cylinder (10a) of the piston-cylinder unit (10) is pivotably connected, that the associated piston rod (10b) engages approximately centrally at a pivot lever (21) pivotably mounted at the transverse frame (19) and that pivotably fastened to the end (21a) of the pivot lever (21) is the bridge frame (22) which extends approximately over the length of the side wall (8a; 8b) and to which the respective side wall (8a; 8b) is fastened at several support points (23).

8. Coil box according to one of claims 1 to 7, **characterised in that** the side wall (8a; 8b) is covered on the hot side (24), apart with insulating material (25), with a foil-like steel layer (26).

9. Coil box according to claim 8, **characterised in that** the foil-like steel layer (26) has a thickness of approximately 0.05 to 0.3 millimetres.

10. Coil box according to one of claims 1 to 8, **characterised in that** in addition to the side walls (8a, 8b) stabilisers (27) adjoining these and paired on the unwinding station (6) are provided with the insulating material (25) and stabilisers (28) similarly paired on the unwinding station (1) are provided with the insulating material (25).

## Revendications

1. Cage à bobine qui est agencée entre un train de laminoir dégrossisseur et un train finisseur, pour des feuillards en métal préaffinés, en particulier pour des feuillards en acier qui sont enroulés à chaud en bobines et protégés vis-à-vis d'une poursuite du refroidissement au moyen de dispositifs à bouclier thermique sur les faces frontales de bobines dans la région d'une station d'enroulement et/ou de déroulement,
**caractérisée en ce que**
les dispositifs à bouclier thermique (7) sont formés par des parois latérales (8a ; 8b) pivotantes susceptibles d'être rapprochées vers les faces frontales de bobine (5a ; 5b) et qui sont réglables en parallèle sur différentes largeurs de bobines (5c) dans une paire formée par des dispositifs à bouclier thermique (7) opposés.

2. Cage à bobine selon la revendication 1, **caractérisée en ce que** les dispositifs à bouclier thermique (7) peuvent être rapprochés vers la face frontale de bobine (5a ; 5b) au moyen d'une unité à piston-et-cylindre (10) respective à fonctionnement en sens opposés.

3. Cage à bobine selon l'une ou l'autre des revendications 1 et 2, **caractérisée en ce que** pour chaque côté de bobine (11 ; 12), les dispositifs à bouclier thermique (10) peuvent être respectivement pivotés sous forme d'unités (15) hors de la région de la station de déroulement (6) au moyen d'un mécanisme d'entraînement pivotant (13).

4. Cage à bobine selon l'une des revendications 1 à 3, **caractérisée en ce que** sur un côté bobine postérieur (11), le dispositif à bouclier thermique (7) peut sortir ou rentrer en pivotant autour d'un axe de pivotement horizontal (13b) dans un plan perpendiculaire à une trajectoire circulaire (13c) et sur un côté bobine antérieur (12), le dispositif à bouclier thermique (7) peut sortir ou rentrer en pivotant autour d'un axe de pivotement vertical (13a) sur une trajectoire circulaire horizontale (14) au moyen du mécanisme d'entraînement pivotant (13).

5. Cage à bobine selon l'une des revendications 1 à 4, **caractérisée en ce que** les parois latérales (8a ; 8b) sont réalisées en forme de portes et peuvent être pivotées en éloignement ou être fermées chacune au moyen du mécanisme d'entraînement à pivotement (13).

6. Cage à bobine selon l'une des revendications 1 à 5, **caractérisée en ce que** le dispositif à bouclier thermique pivotable (7) prévu de chaque côté (11 ; 12) est constitué par le mécanisme d'entraînement à pivotement (13) hydraulique, par des bras en porte-à-faux (16), par l'unité à piston-et-cylindre (10), par un levier de pivotement (17), par un cadre de pont (18) et par la paroi latérale (8a ; 8b) respective, l'unité (15) étant montée sur le cadre transversal (19).

7. Cage à bobine selon l'une des revendications 1 à 6, **caractérisée en ce que** sur le cadre transversal (19) s'étendant transversalement au milieu (9) du train de laminoir, dans la station de déroulement (6), sont fixés des supports (20) faisant chacun saillie vers l'extérieur et sur lesquels est articulé le cylindre (10a) respectif de l'unité à piston-et-cylindre (10), **en ce que** la tige de piston (10b) associée attaque approximativement au milieu un levier de pivotement (21) monté articulé sur le cadre transversal (19), et **en ce qu'**à l'extrémité (21a) du levier de pivotement (21) est fixé de manière articulée le cadre de pont (22) s'étendant approximativement sur la longueur de la paroi latérale (8a ; 8b) et auquel la paroi latérale (8a ; 8b) respective est fixée en plusieurs points de soutien (23).

8. Cage à bobine selon l'une des revendications 1 à 7, **caractérisée en ce que** la paroi latérale (8a ; 8b) est recouverte sur la face chaude (24) par une couche d'acier (26) en forme de feuille, en plus de matériau isolant (25).

9. Cage à bobine selon la revendication 8, **caractérisée en ce que** la couche d'acier (26) en forme de feuille présente une épaisseur d'approximativement 0,05 à 0,3 mm.

10. Cage à bobine selon l'une des revendications 1 à 8, **caractérisée en ce qu'**il est prévu, additionnellement aux parois latérales (8a, 8b) et en raccord avec celles-ci sur la station de déroulement (6), des stabilisateurs (27) par paires pourvus du matériau isolant (25) et, sur la station de déroulement (1), il est également prévu des stabilisateurs (28) par paires pourvus du matériau isolant (25).
